# EUROPEAN PATENT APPLICATION

(11) **EP 4 597 281 A1**
(43) Date of publication of application: **06.08.2025**
(21) Application number: 23881895.9
(22) Date of filing: 25.10.2023
(51) Int. Cl.: G06F 3/04817

(54) **ICON MANAGEMENT METHOD AND APPARATUS**

(30) Priority: 28.10.2022 CN 202211335204
(71) Applicant: Vivo Mobile Communication Co., Ltd., Dongguan, Guangdong 523863 (CN)
(72) Inventor: GU, Panfei, Dongguan, Guangdong 523863 (CN)
(74) Representative: Murgitroyd & Company
(86) International application number: PCT/CN2023/126578
(87) International publication number: WO 2024/088318

(57) **Abstract**

This application discloses an icon management method and apparatus, and relates to the field of communication technologies. The method includes: receiving a first input by a user; displaying a first desktop subpage and a second desktop subpage in a layered manner in response to the first input, where the first desktop subpage is located above the second desktop subpage, and display transparency of the first desktop subpage is greater than zero; receiving a second input by the user on a first icon in the first desktop subpage; and moving the first icon into the second desktop subpage in response to the second input.

## Description

### CROSS-REFERENCE TO RELATED APPLICATION

This application claims priority to Chinese Patent Application No. 202211335204.1 filed on October 28, 2022, which is incorporated herein by reference in its entirety.

### TECHNICAL FIELD

This application relates to the field of electronic device technologies, and specifically, to an icon management method and apparatus.

### BACKGROUND

With the development of electronic devices, people spend increasingly longer time in using electronic devices at an increasingly high frequency. A user can download various application programs through an electronic device to enrich his/her working and entertainment life, and an icon of each application program can be displayed in a page on a desktop of the electronic device.

However, as increasingly more application programs are installed in the electronic device, there are increasingly more icons on the desktop. As a result, when the user needs to organize the icons on the desktop, for example, moving an icon, the user may need to perform a slide input a plurality of times on the desktop to find the icon that needs to be moved, and after the icon is found, the user needs to trigger, in a manner of long pressing and dragging the icon, the electronic device to switch at least one page until the electronic device switches to a page meeting a moving requirement of the user. In this way, an operation processing of moving the icon is complicated.

### SUMMARY

An objective of embodiments of this application is to provide an icon management method and apparatus, which can resolve the problem of a complicated operation process of moving an icon by a user.

According to a first aspect, an embodiment of this application provides an icon management method, the method including: receiving a first input by a user; displaying a first desktop subpage and a second desktop subpage in a layered manner in response to the first input, where the first desktop subpage is located above the second desktop subpage, and display transparency of the first desktop subpage is greater than zero; receiving a second input by the user for a first icon in the first desktop subpage; and moving the first icon into the second desktop subpage in response to the second input.

According to a second aspect, an embodiment of this application provides an icon management apparatus, the apparatus including: a receiving module, a display module, and a control module, where the receiving module is configured to receive a first input by a user; the display module is configured to display a first desktop subpage and a second desktop subpage in a layered manner in response to the first input received by the receiving module, where the first desktop subpage is located above the second desktop subpage, and display transparency of the first desktop subpage is greater than zero; the receiving module is further configured to receive a second input by the user for a first icon in the first desktop subpage; and the control module is configured to move the first icon into the second desktop subpage in response to the second input received by the receiving module.

According to a third aspect, an embodiment of this application provides an electronic device, including a processor and a memory, where the memory stores a program or an instruction executable on the processor, and when the program or the instruction is executed by the processor, the steps of the method according to the first aspect are implemented.

According to a fourth aspect, an embodiment of this application provides a readable storage medium, having a program or an instruction stored therein, where when the program or the instruction is executed by a processor, the steps of the method according to the first aspect are implemented.

According to a fifth aspect, an embodiment of this application provides a chip, including a processor and a communication interface, where the communication interface is coupled to the processor, and the processor is configured to execute a program or an instruction, to implement the method according to the first aspect.

According to a sixth aspect, an embodiment of this application provides a computer program product, wherein the program product is stored in a storage medium, and when the program product is executed by at least one processor, the method according to the first aspect is implemented.

In the embodiments of this application, the first input by the user is received; the first desktop subpage and the second desktop subpage are displayed in a layered manner in response to the first input, where the first desktop subpage is located above the second desktop subpage, and the display transparency of the first desktop subpage is greater than zero; the second input by the user for the first icon in the first desktop subpage is received; and the first icon is moved into the second desktop subpage in response to the second input. According to this solution, when the user needs to organize an icon on a desktop of an electronic device, since the user can trigger, through the first input on any desktop subpage on the desktop, the electronic device to display two desktop subpages including the desktop subpage on the desktop in a layered manner, and display an upper desktop subpage with specific transparency, the user can preview icons in a lower desktop subpage to determine a position to which the icon is to be moved, and the user then may trigger, through another input, the electronic device to directly move the icon in the upper desktop subpage to the lower desktop subpage. Therefore, compared with an icon moving manner of long pressing and dragging a to-be-moved icon to trigger switching between desktop subpages, the icon management method provided in the embodiments of this application can preview icons in other desktop subpages in advance, thereby simplifying an operation process of moving an icon, and reducing the difficulty in moving an icon.

### BRIEF DESCRIPTION OF THE DRAWINGS

FIG. 1 is a flowchart of an icon management method according to an embodiment of this application;
FIG. 2 is a first schematic diagram of an example of an icon management method according to an embodiment of this application;
FIG. 3 is a second schematic diagram of an example of an icon management method according to an embodiment of this application;
FIG. 4 is a third schematic diagram of an example of an icon management method according to an embodiment of this application;
FIG. 5 is a fourth schematic diagram of an example of an icon management method according to an embodiment of this application;
FIG. 6 is a fifth schematic diagram of an example of an icon management method according to an embodiment of this application;
FIG. 7 is a sixth schematic diagram of an example of an icon management method according to an embodiment of this application;
FIG. 8 is a schematic structural diagram of an icon management apparatus according to an embodiment of this application;
FIG. 9 is a first schematic structural diagram of hardware of an electronic device according to an embodiment of this application; and
FIG. 10 is a second schematic structural diagram of hardware of an electronic device according to an embodiment of this application.

### DETAILED DESCRIPTION

The technical solutions in embodiments of this application are clearly described in the following with reference to the accompanying drawings in the embodiments of this application. Apparently, the described embodiments are some rather than all of the embodiments of this application. All other embodiments obtained by a person of ordinary skill in the art based on the embodiments of this application shall fall within the protection scope of this application.

In the specification and the claims of this application, the terms "first" and "second" are used to distinguish similar objects, but are not used to describe a specific sequence or order. It should be understood that data used in this way are interchangeable in proper circumstances, so that the embodiments of this application can be implemented in another sequence other than those illustrated or described herein. In addition, the objects distinguished by "first" and "second" generally belong to the same category and a number of the objects is not limited. For example, there may be one or more first objects. In addition, in the specification and the claims, "and/or" indicates at least one of connected objects, and the character "/" generally indicates an "or" relationship between associated objects.

The following describes in detail an icon management method and apparatus, an electronic device, and a readable storage medium provided in the embodiments of this application with reference to the accompanying drawings and through specific embodiments and application scenarios thereof.

At present, desktop icons of many electronic devices (for example, mobile phones) are mainly presented in a horizontal direction. On this basis, when a user intends to move an icon in a desktop subpage on a desktop into another desktop subpage on the desktop, for example, an icon position in the another desktop subpage or a folder in the another desktop subpage, the user needs to drag the icon by a long path, and the operation is inconvenient.

Further, when the user needs to view icons in different desktop subpages on the desktop, the user needs to trigger the electronic device to perform switching between desktop subpages to view the icons in the different desktop subpages, leading to a long operation path of viewing the icons in the different desktop subpages.

In the icon management method provided in the embodiments of this application, when the user needs to organize an icon on a desktop, the user may trigger, through an input on a desktop subpage A on the desktop, the electronic device to display the desktop subpage A and a desktop subpage B on the desktop in a layered manner, where the desktop subpage A is located above the desktop subpage B, and the upper desktop subpage A is displayed with specific transparency; and the user may preview icons in the lower desktop subpage B, to determine a position to which the icon is to be moved. Then, the user may trigger, through an input on an icon 1 in the upper desktop subpage A, the electronic device to directly move the icon 1 into the lower desktop subpage B to avoid a process of pressing the icon 1, triggering switching between desktop subpages, and dragging the icon into the lower desktop subpage B. In this way, icons in other desktop subpages may be previewed in advance, thereby simplifying an operation process of moving an icon between different desktop subpages, and reducing the difficulty in moving an icon.

The following describes in detail a method of moving the icon 1 in the desktop subpage A into the desktop subpage B through inputs by the user.

In a manner, before the user moves the icon 1, the user may first trigger the electronic device to control the desktop subpage A to enter a target state, where in the target state, an icon in a first desktop subpage can only be moved into a second desktop subpage. That is, a position change of the icon in the desktop subpage A indicates a position to which the icon is to be moved in the lower desktop subpage. Specifically, the user may drag the icon 1 within a screen range of the electronic device, to move the icon 1 to a specific position in the desktop subpage B. In this way, the user may directly drag the icon within the screen range to implement movement of the icon across desktop subpages, thereby simplifying an operation process of moving an icon across desktop subpages.

In another manner, the user may first drag the icon 1 to a first display region of a longitudinal selection control. In this case, the electronic device automatically cancels the display of the desktop subpage A, and the user then drags the icon 1 from the first display region to a specified position in the desktop subpage B, where the longitudinal selection control is configured to switch to the lower desktop subpage. In this way, the user may directly drag the icon to implement movement of the icon across desktop subpages, thereby simplifying an operation process of moving an icon by the user.

Further, when the electronic device displays the desktop subpage A and the desktop subpage B in a layered manner, the electronic device may further display a longitudinal selection control, where the longitudinal selection control is configured to switch to a lower desktop subpage. Therefore, the user may trigger, through an input on the longitudinal selection control, to switch the lower desktop subpage B to any desktop subpage C on the desktop, so that the user triggers, through an input on the icon in the desktop subpage A, the electronic device to directly move the icon into the desktop subpage C. In this way, an operation process of moving an icon between different desktop subpages may be further simplified, and the difficulty in moving an icon may be reduced.

Optionally, when the electronic device displays two desktop subpages on a desktop in a layered manner, for example, the desktop subpage A and the desktop subpage B, the upper desktop subpage A may be displayed above the lower desktop subpage B with specific transparency, so that the user can view icons in the two desktop subpages on the desktop simultaneously. In this way, the user can view more icons on the desktop simultaneously, thereby simplifying an operation process of viewing icons on the desktop.

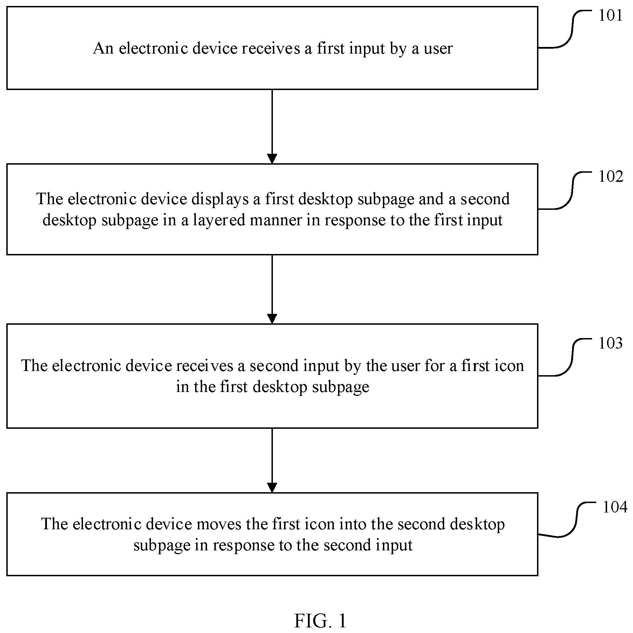

An embodiment of this application provides an icon management method. FIG. 1 is a flowchart of an icon management method according to an embodiment of this application, and the method may be applied to an electronic device. As shown in FIG. 1, the icon management method provided in the embodiments of this application may include the following Step 101 to Step 104.

Step 101. The electronic device receives a first input by a user.

In the embodiments of this application, the first input may be an input by the user on any position in a first desktop subpage.

Optionally, the first input may be a touch input or an air gesture input by the user for the first desktop subpage.

Optionally, the first input may be a tap input (for example, inputs such as a single-tap input, a double-tap input, any quantity of tap inputs, a long press input, or a short press input) by the user on any position in the first desktop subpage, or the first input may be a voice instruction inputted by the user, or the first input may be a specific gesture inputted by the user (for example, inputs such as a single-tap gesture, a slide gesture, a drag gesture, a pressure recognition gesture, a long press gesture, an area change gesture a double-press gesture, or a double-tap gesture). A specific form of the first input may be determined according to an actual usage requirement, which is not limited in the embodiments of this application.

In an example in which the first input is a touch input by the user on any position in the first desktop subpage, the first input specifically may include an input that the user slides at an edge of the first desktop subpage and suspends for a specific duration, that is, stays at a sliding end position for a specific duration after the sliding.

Step 102. The electronic device displays a first desktop subpage and a second desktop subpage in a layered manner in response to the first input.

The first desktop subpage is located above the second desktop subpage, and display transparency of the first desktop subpage is greater than zero.

Optionally, the desktop of the electronic device may include at least two desktop subpages, and each desktop subpage includes at least one icon.

Optionally, in the embodiments of this application, each icon in the at least one icon indicates an application program, a folder, a component, a control, or a widget in the electronic device.

For example, the component may include: a clock component, a music component, a weather component, or the like.

Optionally, the second desktop subpage may be a first desktop subpage, a last desktop subpage, or a desktop subpage adjacent to the first desktop subpage in at least one desktop subpage on the desktop of the electronic device.

For example, when the second desktop subpage is a desktop subpage adjacent to the first desktop subpage in the at least one desktop subpage, the second desktop subpage may be a previous desktop subpage of the first desktop subpage or may be a next desktop subpage of the first desktop subpage.

Further, if the first desktop subpage is the last desktop subpage in the at least one desktop subpage, the second desktop subpage may be the first desktop subpage in the at least one desktop subpage.

It may be understood that, in a normal display state of the desktop, desktop subpages are not displayed in a layered manner, to prevent the display of the desktop subpages in the normal display state.

Optionally, that the electronic device displays the first desktop subpage and the second desktop subpage in a layered manner specifically may be: the electronic device displays the first desktop subpage on the second desktop subpage. That is, the first desktop subpage is an upper desktop subpage, and the second desktop subpage is a lower desktop subpage.

Optionally, the first desktop subpage and the second desktop subpage at least partially overlap with each other.

In the embodiments of this application, after the electronic device receives the first input, the electronic device may be controlled to enter an icon management mode. In the icon management mode, the electronic device may display the first desktop subpage and the second desktop subpage in a layered manner, to help the user to manage icons.

Optionally, in the icon management mode, the electronic device may further display a longitudinal selection control.

Optionally, the foregoing Step 102 specifically may be implemented through the following Step 102a.

Step 102a. The electronic device displays, in response to the first input, the first desktop subpage on the second desktop subpage with display transparency that is greater than zero.

It may be understood that, in the embodiments of this application, the first desktop subpage is displayed on the second desktop subpage, and the display transparency of the first desktop subpage is greater than zero. For example, the display transparency of the first desktop subpage is greater than or equal to preset transparency.

Optionally, the preset transparency may be default in the electronic device or may be set by the user manually.

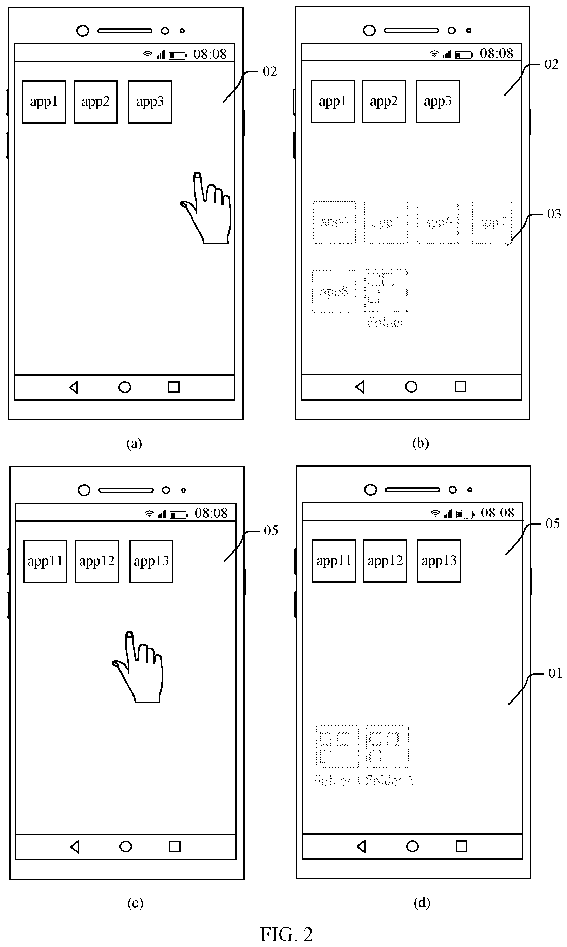

For example, the desktop of the electronic device includes five desktop subpages: a desktop subpage 01, a desktop subpage 02, a desktop subpage 03, a desktop subpage 04, and a desktop subpage 05. The desktop subpage 02 includes app1, app2, and app3, and the desktop subpage 03 includes app4, app5, app6, app7, app8, and a folder. In this case, as shown by FIG. 2(a), when the user long presses any position in the desktop subpage 02 (that is, the electronic device receives the first input), the electronic device may respond to the first input; and as shown by FIG. 2(b), the electronic device may display the desktop subpage 02 and the desktop subpage 03 in a layered manner, and the desktop subpage 02 is displayed on the desktop subpage 03 with the preset transparency.

Alternatively, the desktop subpage 05 includes app11, app12, and app13, and the desktop subpage 01 includes a folder 1 and a folder 2. In this case, as shown in FIG. 2(c), when the user long presses any position in the desktop subpage 05, the electronic device responds to the first input; and as shown in FIG. 2(d), the electronic device may display the desktop subpage 05 and the desktop subpage 01 in a layered manner, and the desktop subpage 05 is displayed above the desktop subpage 01 with the preset transparency. The rest desktop subpages are displayed by analogy.

In this way, since the electronic device may display the first desktop subpage whose display transparency is greater than zero on the second desktop subpage, content of the second desktop subpage may be displayed through the first desktop subpage, that is, the electronic device may display two desktop subpages simultaneously. Therefore, compared with a solution in which the electronic device displays one desktop subpage each time in the related art, through the icon management method provided in the embodiments of this application, the user can view more icons in more desktop subpages on the desktop simultaneously.

Step 103. The electronic device receives a second input by the user for a first icon in the first desktop subpage.

In the embodiments of this application, the first icon may be any icon in the first desktop subpage.

Optionally, when the electronic device displays two desktop subpages (for example, the first desktop subpage and the second desktop subpage) in a layered manner, an icon in the lower desktop subpage is in a non-operational state. That is, an input by the user on an overlapping region of the two desktop subpages only acts on the upper desktop subpage and does not act on the lower desktop subpage. For example, the user cannot drag an icon in the second desktop subpage.

It should be noted that, the second desktop subpage may be a desktop subpage to which the user needs to move the first icon.

Optionally, the second input may be a touch input or an air gesture input by the user for the first icon.

Optionally, the second input may be a drag input by the user on the first icon in the first desktop subpage, or the second input may be a voice instruction inputted by the user, or the second input may be a specific gesture inputted by the user (for example, inputs such as a single-tap gesture, a slide gesture, a drag gesture, a pressure recognition gesture, a long press gesture, an area change gesture a double-press gesture, or a double-tap gesture). A specific form of the second input may be determined according to an actual usage requirement, which is not limited in the embodiments of this application.

In an example in which the second input is a touch input on the first icon, the second input may be a drag input by the user on the first desktop subpage.

Step 104. The electronic device moves the first icon into the second desktop subpage in response to the second input.

In the embodiments of this application, after the electronic device moves the first icon into the second desktop subpage, the first desktop subpage does not include the first icon, and the second desktop subpage includes the first icon.

Optionally, "the electronic device moves the first icon into the second desktop subpage" may include: the electronic device moves the first icon to an icon position in the second desktop subpage, adds the first icon to a folder in the second desktop subpage, or classifies the first icon and an icon in the second desktop subpage into a newly created folder.

Optionally, in a possible implementation, there is a correspondence between the upper desktop subpage and the lower desktop subpage, that is, each position in the upper desktop subpage corresponds to a position in the lower desktop subpage. The second input may be an input by the user of dragging the first icon in a display region of the first desktop subpage, for example, dragging the first icon from a first position in the first desktop subpage to a second position in the first desktop subpage, so that the electronic device may move the first icon to an icon position that is in the second desktop subpage and corresponds to the second position in response to the second input.

Optionally, in another possible implementation, the user may first drag the first icon to a first display region in which the longitudinal selection control is located, to trigger the electronic device to cancel the display of the first desktop subpage, and continue to drag the first icon into the second desktop subpage after the electronic device cancels the display of the first desktop subpage, to cause the electronic device to move the first icon into the second desktop subpage. Alternatively, the user may drag the first icon to the first display region in which the longitudinal selection control is located, and the electronic device may directly move the first icon to a spare icon position in the second desktop subpage. For description of the longitudinal selection control, reference may be made to related description of the longitudinal selection control in the following embodiments. To avoid repetition, details are not described herein.

In the icon management method provided in the embodiments of this application, when the user needs to organize an icon on a desktop of an electronic device, since the user can trigger, through the first input on any desktop subpage on the desktop, the electronic device to display two desktop subpages including the desktop subpage on the desktop in a layered manner, and display an upper desktop subpage with specific transparency, the user can preview icons in a lower desktop subpage to determine a position to which the icon is to be moved, and the user then may trigger, through another input, the electronic device to directly move the icon in the upper desktop subpage to the lower desktop subpage. Therefore, compared with an icon moving manner of long pressing and dragging a to-be-moved icon to trigger switching between interfaces, the icon management method provided in the embodiments of this application can preview icons in other desktop subpages in advance, thereby simplifying an operation process of moving an icon, and reducing the difficulty in moving an icon.

Optionally, the foregoing Step 104 specifically may be implemented through any one of the following steps: Step a, Step b, or Step c.

Step a. The electronic device moves the first icon into a first folder in the second desktop subpage in response to the second input.

Step b. The electronic device moves the first icon to a first spare position in the second desktop subpage in response to the second input.

Step c. The electronic device creates a second folder at a position corresponding to a second icon in the second desktop subpage in response to the second input, where the second folder includes the first icon and the second icon.

For description of a specific movement manner of the first icon, reference may be made to related description of moving the first icon in the following embodiments. To avoid repetition, details are not described herein.

Optionally, after the foregoing Step 101, the icon management method provided in the embodiments of this application may further include the following Step 105.

Step 105. The electronic device displays a longitudinal selection control in a first display region in response to the first input.

The longitudinal selection control may be configured to switch the second desktop subpage to a third desktop subpage, and the display region of the first desktop subpage is different from the first display region.

Optionally, when the second desktop subpage does not meet a movement requirement of the user, the user may trigger, after performing the first input and through an input (for example, a fourth input described below) on the longitudinal selection control, the electronic device to switch the lower desktop subpage, for example, change the lower desktop subpage to a desktop subpage meeting the movement requirement.

Optionally, a size of the first display region may be greater than or equal to a size of the longitudinal selection control.

Optionally, the longitudinal selection control may be displayed above the lower desktop subpage and do not overlap with the upper desktop subpage. That is, after the longitudinal selection control is displayed, the upper desktop subpage is displayed in a compressed manner. In other words, the longitudinal selection control and the upper desktop subpage are displayed at the same layer.

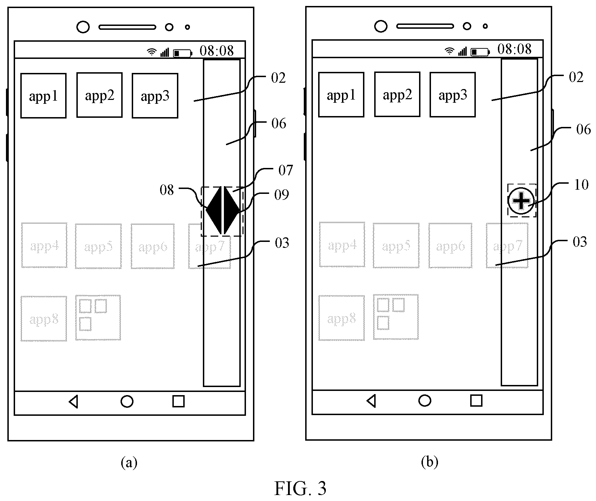

For example, as shown in FIG. 3(a) and FIG. 3(b), the electronic device displays, in response to the first input, a top desktop subpage 02 and a longitudinal selection control 06 on a bottom desktop subpage 03, and a display region of the top desktop subpage 02 does not overlap with a display region of the longitudinal selection control.

It may be understood that, display transparency of the longitudinal selection control may be greater than zero, for example, the longitudinal selection control may be displayed with the preset transparency, so that the user can view related content in the bottom desktop subpage located below the longitudinal selection control.

Optionally, the foregoing Step 105 and Step 104 may be performed simultaneously. That is, after responding to the second input, the electronic device may display the first desktop subpage and the second desktop subpage in a layered manner and display the longitudinal selection control.

Optionally, in the embodiments of this application, the user may first trigger, through an input (for example, the fourth input described below) on the longitudinal selection control, the electronic device to switch the second desktop subpage to the third desktop subpage. After the lower desktop subpage, namely, the third desktop subpage is selected, the user performs the second input on the first icon again to trigger the electronic device to move the first icon.

Optionally, after the foregoing Step 102, the icon management method provided in the embodiments of this application may further include the following Step 106 and Step 107.

Step 106. The electronic device receives a fourth input by the user.

Optionally, the fourth input may be a touch input or an air gesture input by the user for the longitudinal selection control.

Optionally, the fourth input may be a tap input (for example, inputs such as a single-tap input, a double-tap input, any quantity of tap inputs, a long press input, or a short press input) by the user on the longitudinal selection control, or the fourth input may be a voice instruction inputted by the user, or the fourth input may be a specific gesture inputted by the user (for example, inputs such as a single-tap gesture, a slide gesture, a drag gesture, a pressure recognition gesture, a long press gesture, an area change gesture a double-press gesture, or a double-tap gesture). A specific form of the fourth input may be determined according to an actual usage requirement, which is not limited in the embodiments of this application.

Step 107. The electronic device performs a target operation corresponding to the fourth input in response to the fourth input.

The target operation may include any one of the following: updating and displaying the second desktop subpage into a fourth desktop subpage; or creating a fifth desktop subpage.

Optionally, the fourth desktop subpage and the third desktop subpage may be the same or may be different.

Optionally, the longitudinal selection control may include a desktop subpage switch control. The desktop subpage switch control may be configured to control switching of a bottom cutting plane.

For example, as shown in FIG. 3(a), the electronic device may display the desktop subpage 03, and display the desktop subpage 02 and the longitudinal selection control 06 on the desktop subpage 03 with transparency of 50%, where the longitudinal selection control 06 includes a desktop subpage switch control 07.

Optionally, as shown in FIG. 3(a), the desktop subpage switch control 07 may include a "previous page" option 08 and a "next page" option 09. The "previous page" option 08 is used for switching the lower desktop subpage to a previous desktop subpage of the lower desktop subpage displayed currently; and the "next page" option 09 is used for switching the lower desktop subpage to a next desktop subpage of the lower desktop subpage displayed currently.

Optionally, the longitudinal selection control may further include an addition control. As shown in FIG. 3(b), the addition control 10 may be configured to newly create a blank desktop subpage on the desktop. For example, the user taps the addition control, and the lower desktop subpage is switched to the newly created blank desktop subpage for displaying.

Optionally, in a case that the electronic device displays the longitudinal selection control, the user may switch, through an input on the longitudinal selection control, to display the addition control and the desktop subpage switch control. For example, in a case that the longitudinal selection control includes the addition control, the user may single tap the longitudinal selection control, to switch the addition control to the desktop subpage switch control for displaying.

Optionally, the longitudinal selection control may be further configured to adjust a display sequence of the lower desktop subpage.

Optionally, after the foregoing Step 102, the icon management method provided in the embodiments of this application may further include the following Step 108 to Step 111, or Step 108 to Step 110 and Step 112.

Step 108. The electronic device receives a fifth input by the user.

Optionally, the fifth input may be a long press input by the user on the longitudinal selection control.

Step 109. The electronic device displays thumbnails of at least two desktop subpages in response to the fifth input.

The thumbnails of the at least two desktop subpages include a thumbnail of the first desktop subpage and a thumbnail of the second desktop subpage.

Optionally, the thumbnails of the at least two desktop subpages may include thumbnails of all desktop subpages of the electronic device.

Optionally, if the electronic device has many desktop subpages, the thumbnails of all the desktop subpages cannot be displayed sequentially, and the user may slide the thumbnails of the desktop subpages through a slide input, to trigger the electronic device to display the thumbnails of all the desktop subpages sequentially.

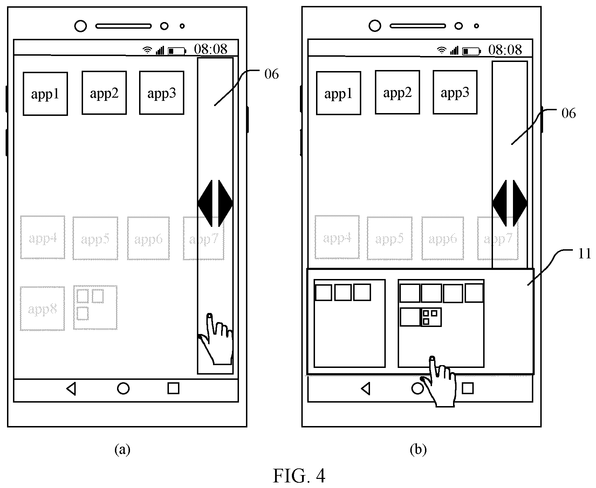

For example, as shown in FIG. 4(a), the user may long press the longitudinal selection control 06, and the electronic device may enter a desktop subpage sequence management mode. Specifically, as shown in FIG. 4(b), the electronic device may display a desktop subpage sequence adjustment box 11 in a bottom region of a screen, and the desktop subpage sequence adjustment box 11 may include all desktop subpages on the desktop.

For example, as shown in FIG. 4(b), the electronic device may present all the desktop subpages on the desktop in a horizontal list manner, and a present sequence follows an actual display sequence of the current desktop subpages.

Step 110. The electronic device receives a sixth input by the user.

Optionally, the sixth input may be a drag input by the user on a thumbnail of a desktop subpage. The user may change a display sequence of the thumbnail of the desktop subpage through the drag input on the thumbnail of the desktop page.

Step 111. The electronic device updates a display sequence of the thumbnails of the at least two desktop subpages in response to the sixth input.

The display sequence of the thumbnails of the at least two desktop subpages corresponds to a display sequence of the at least two desktop subpages.

It may be understood that, when the electronic device updates the display sequence of the thumbnails of the at least two desktop subpages, the display sequence of the at least two desktop subpages is also updated.

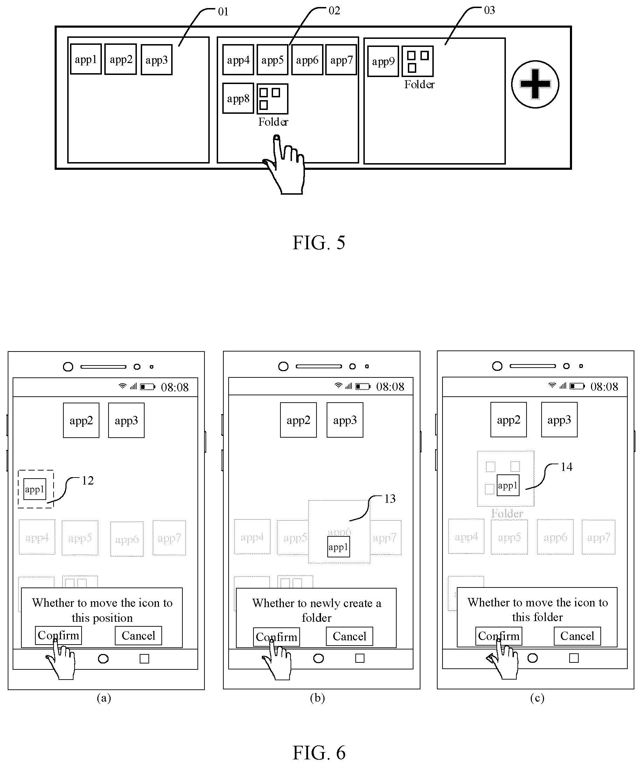

For example, FIG. 5 shows an enlarged view of the desktop subpage sequence adjustment box, and the user may adjust a display sequence of longitudinal desktop subpages in the desktop subpage sequence adjustment box. For example, the electronic device includes three desktop subpages: a thumbnail of a desktop subpage 01, a thumbnail of a desktop subpage 02, and a thumbnail of a desktop subpage 03. If the user drags the thumbnail of the desktop subpage 03 to a middle position of the thumbnail of the desktop subpage 02 and the thumbnail of the desktop subpage 01 in the desktop subpage sequence adjustment box, the electronic device considers that the user changes a display sequence of the desktop subpage 02 and the desktop subpage 03; and in a case that the lower desktop subpage is the desktop subpage 03, if the user taps the desktop subpage switch control in the longitudinal selection control, the lower desktop subpage 03 is switched to the desktop subpage 02 after the desktop subpage 03.

Step 112. The electronic device newly creates a thumbnail corresponding to a sixth desktop subpage in response to the sixth input.

Optionally, the desktop subpage sequence adjustment box may further include an addition control, the user may tap the addition control to trigger the electronic device to newly create a thumbnail corresponding to a blank desktop subpage (that is, the thumbnail corresponding to the sixth desktop subpage), and the thumbnail corresponding to the blank desktop subpage is sequentially displayed at an end of a current list by default.

Optionally, if a blank desktop subpage already exists on the desktop, when the user taps the addition control in the desktop subpage sequence adjustment box, the electronic device may automatically position a thumbnail corresponding to the blank desktop subpage and prompt the user.

In this way, when the user triggers, through the first input, the electronic device to display the first desktop subpage and the second desktop subpage in a layered manner, the electronic device may further display a longitudinal selection control configured to switch to the lower desktop subpage, so that the user can trigger, through an input on the longitudinal selection control, the electronic device to switch the lower desktop subpage, thereby ensuring that the user can move the first icon into the third desktop subpage meeting the movement requirement of the user.

The following describes the icon management method provided in the embodiments of this application by using two possible implementations (that is, a possible implementation and another possible implementation).

### A possible implementation

Optionally, In the possible implementation, before the foregoing Step 103, the icon management method provided in the embodiments of this application may further include the following Step A and Step B.

Step A. The electronic device receives a seventh input by the user for the first desktop subpage.

In the embodiments of this application, the seventh input may be a long press input by the user on any position in the first desktop subpage.

For example, the seventh input may be a long press input by the user on a blank region in the first desktop subpage, or may be a long press input by the user on an icon, for example, the first icon in the first desktop subpage.

Step B. The electronic device causes, in response to the seventh input, an icon in the first desktop subpage to be in a target state.

The target state indicates that the icon in the first desktop subpage can only be moved into the second desktop subpage.

It may be understood that, in the target state, the user can only perform a drag operation on the icon in the upper first desktop subpage, and a destination position of the dragged icon falls in the lower second desktop subpage.

Optionally, in Manner 1, a position to which the icon is to be moved in the second desktop subpage may be a spare icon position in the second desktop subpage; in Manner 2, the position to which the icon is to be moved in the second desktop subpage may be an icon position on with an icon is displayed in the second desktop subpage, where the icon on the icon position is not a folder icon but an icon of a widget or an icon of an application program; and in Manner 3, the position to which the icon is to be moved in the second desktop subpage may be an icon position of an folder icon in the second desktop subpage.

Optionally, an icon position corresponding to an input end position of the drag input may be an icon position corresponding to the destination position of the dragged first icon in the lower desktop subpage, that is, the dragged first icon does not fall in an icon position in the upper desktop subpage.

### Manner 1

Optionally, the second input may include a third sub-input and a fourth sub-input.

Optionally, the foregoing Step 104 specifically may be implemented through the following Step 104a and Step 104b.

Step 104a. In response to the third sub-input by the user of dragging the first icon in the first desktop subpage to a first target position in the first desktop subpage, the electronic device displays first prompt information.

The first prompt information is used for indicating whether to move the first icon to a second spare position in the second desktop subpage. The second spare position is a position corresponding to the first target position.

Step 104b. In response to the fourth sub-input by the user for the first prompt information, the electronic device moves the first icon to the second spare position in the second desktop subpage.

### Manner 2

Optionally, the second input may include a fifth sub-input and a sixth sub-input.

Optionally, the foregoing Step 104 specifically may be implemented through the following Step 104c and Step 104d.

Step 104c. In response to the fifth sub-input by the user of dragging the first icon in the first desktop subpage to a second target position in the first desktop subpage, the electronic device enlarges and displays a third icon at a third target position in the second desktop subpage, and displays second prompt information.

The third target position is a position corresponding to the second target position, and the second prompt information is used for indicating whether to newly create a third folder at the third target position.

Step 104d. In response to the sixth sub-input by the user for the second prompt information, the electronic device newly creates the third folder at the third target position.

The third folder includes the first icon and the third icon.

### Manner 3

Optionally, the second input may include a seventh sub-input and an eighth sub-input.

Optionally, the foregoing Step 104 specifically may be implemented through the following Step 104e and Step 104f.

Step 104e. In response to the seventh sub-input by the user of dragging the first icon in the first desktop subpage to a fourth target position in the first desktop subpage, the electronic device enlarges and displays a fourth folder at a fifth target position in the second desktop subpage, and displays third prompt information.

The fifth target position is a position corresponding to the fourth target position, and the third prompt information is used for indicating whether to move the first icon into the fourth folder.

Step 104f. In response to the eighth sub-input by the user for the third prompt information, the electronic device moves the first icon into the fourth folder.

The following describes the icon management method provided in the embodiments of this application by using the three manners (that is, Manner 1, Manner 2, and Manner 3) with reference to the accompanying drawings.

For example, as shown in FIG. 2(a), the electronic device displays the first desktop subpage on the desktop, and the user may long press at a left edge of the first desktop subpage, that is, the electronic device receives the first input by the user on the first desktop subpage on the desktop of the electronic device, so that the electronic device may respond to the first input; and as shown in FIG. 2(b), the electronic device may display the first desktop subpage and the second desktop subpage in a layered manner, where the second desktop subpage is a previous desktop subpage of the first desktop subpage, and the first desktop subpage is displayed on the second desktop subpage with transparency of 50%. That is, the user can view icons in the first desktop subpage and the second desktop subpage simultaneously.

The user may long press a blank region in the first desktop subpage (that is, the electronic device receives the fourth input by the user on the first desktop subpage), and the electronic device controls, in response to the fourth input, an icon in the first desktop subpage to enter a target state. The user may drag the first icon within the screen range of the electronic device to implement movement of the first icon to a specific position in the second desktop subpage. As shown in FIG. 6, the user may drag app1 (that is, the first icon) in the first desktop subpage to a specific position in the first desktop subpage, and the electronic device may respond to the drag input:

For example, in Manner 1, that is, when the drag input is the third sub-input and the specific position corresponds to a spare icon position 12 in the second desktop subpage, as shown in FIG. 6(a), prompt information is displayed: Whether to move the icon to this position. If the user selects "Confirm" (that is, the electronic device receives the fourth sub-input by the user on the first prompt information), the electronic device automatically moves the first icon to the corresponding spare icon position 12 in the lower desktop subpage; and if the user selects "Cancel", the electronic device cancels the movement.

For example, in Manner 2, that is, when the drag input is the fifth sub-input and the specific position corresponds to an icon position 13 of app6 in the second desktop subpage, as shown in FIG. 6(b), the electronic device enlarges and displays an icon corresponding to app6 and displays prompt information: Whether to newly create a folder. If the user selects "Confirm" (that is, the electronic device receives the sixth sub-input by the user on the second prompt information), the electronic device continues to prompt the user to perform a folder name operation, and after a name is determined, the electronic device moves the first icon to the folder generated at the corresponding icon position in the lower desktop subpage; and if the user selects "Cancel", the electronic device cancels the movement.

For example, in Manner 3, that is, when the drag input is the seventh sub-input and the specific position corresponds to an icon position 14 of a folder in the second desktop subpage, as shown in FIG. 6(c), the electronic device enlarges and displays an icon corresponding to the folder and displays prompt information: Whether to move the icon to this folder. If the user selects "Confirm" (that is, the electronic device receives the eighth sub-input by the user on the third prompt information), the electronic device automatically moves the first icon into the corresponding folder in the lower desktop subpage; and if the user selects "Cancel", the electronic device cancels the movement.

In the embodiments of this application, after the Step B, the electronic device may perform one of Manner 1, Manner 2, or Manner 3, which specifically may be determined by a changed position of the icon in the first desktop subpage.

Optionally, after the electronic device automatically moves the first icon to the icon position in the lower desktop subpage, the upper desktop subpage may be automatically hidden, and the lower desktop is automatically switched as the upper desktop subpage.

In this way, when the electronic device displays two desktop subpages on the desktop of the electronic device in a layered manner, the electronic device may set an icon in the upper desktop subpage to a target state, so that the icon in the upper desktop subpage can only be dragged into the lower desktop subpage. Therefore, the user can conveniently and quickly move a desktop icon across desktop subpages and prevent an accidental touch on an icon in an icon moving process.

### Another possible implementation

Optionally, in the another possible implementation, the foregoing Step 104 specifically may be implemented through the following Step 104g and Step 104h.

Optionally, the second input includes a first sub-input and a second sub-input.

Step 104g. In response to the first sub-input by the user of dragging the first icon to the first display region, the electronic device keeps displaying the second desktop subpage, cancels the display of the first desktop subpage, and displays the first icon in the first display region.

Step 104h. In response to the second sub-input by the user of dragging the first icon from the first display region into the second desktop subpage, the electronic device displays the first icon in the second desktop subpage.

For description of the first display region, reference may be made to the related description in the foregoing embodiments.

In the embodiments of this application, after the electronic device cancels the display of the first desktop subpage, the user may drag the first icon to any position in the second desktop subpage, to trigger the electronic device to display the first icon at a position meeting the movement requirement of the user in the second desktop subpage.

It may be understood that, keeping displaying the second desktop subpage and canceling the display of the first desktop subpage is to cancel the display of the upper desktop subpage.

Optionally, moving the first icon into the second desktop subpage may be to drag the first icon to a first spare position (that is, a spare icon position) in the second desktop subpage; or may be to drag the first icon to an icon position corresponding to an application program in the second desktop subpage, create a new folder, and place an icon corresponding to the application program and the first icon into the newly created folder; or may be to drag the first icon into a folder in the third desktop subpage.

The following exemplarily describes the another possible implementation with reference to the accompanying drawings.

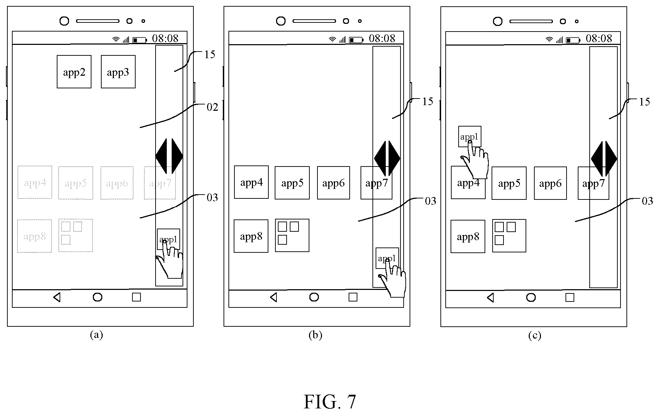

For example, as shown in FIG. 2(a), the user may long press at the left edge of the first desktop subpage, that is, the electronic device receives the first input by the user on the first desktop subpage on the desktop of the electronic device, so that the electronic device responds to the first input; and as shown in FIG. 7(a), the electronic device displays the desktop subpage 02 (upper desktop subpage) and the desktop subpage 03 (lower desktop subpage) in a layered manner, and displays a longitudinal selection control in a first display region 15. The user may move an icon of "app1" in the desktop subpage 02 to the first display region 15, that is, the electronic device receives the second input, so that the electronic device may respond to the second input; and as shown in FIG. 7(b), the electronic device may cancel the display of the desktop subpage 02 and keep displaying the desktop subpage 03.

Then, as shown in FIG. 7(b), the user may drag the icon of "app1" from the first display region 15 into the second desktop subpage, that is, the electronic device receives and responds to the second input; and as shown in FIG. 7(c), the electronic device may display the icon of "app1" in the second desktop subpage.

In this way, the electronic device may automatically cancel the display the upper desktop subpage and switch the lower desktop subpage as the upper desktop subpage for displaying when the user drags the first icon to the first display region, so that the user can directly move the first icon to a required position, thereby simplifying an operation process of moving an icon by the user.

An entity executing the icon management method provided in the embodiments of this application may be an icon management apparatus. An example in which an icon management apparatus executes the icon management method is used in the embodiments of this application to describe the icon management apparatus provided in the embodiments of this application.

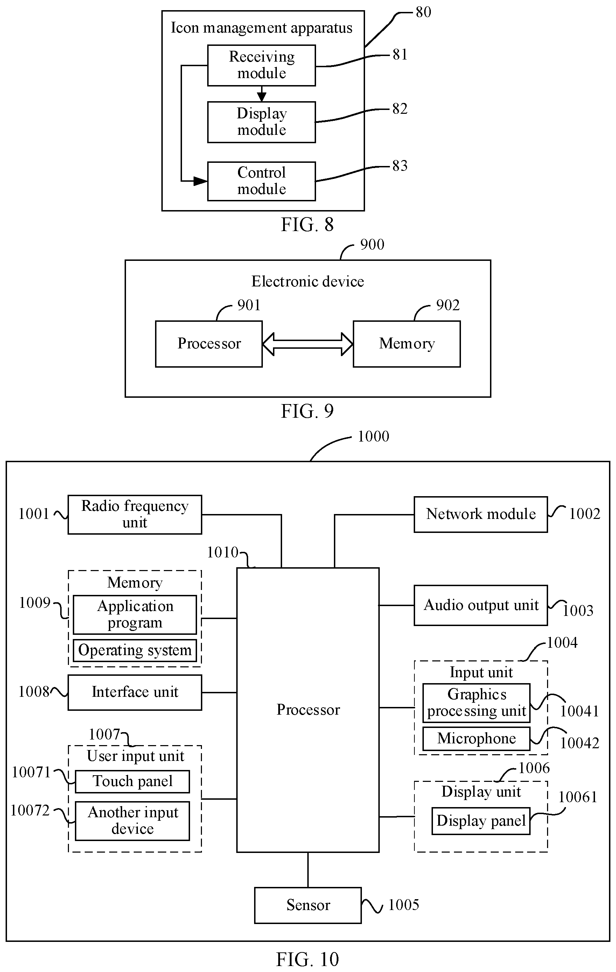

FIG. 8 is a schematic diagram of a possible structure of an icon management apparatus according to an embodiment of this application. As shown in FIG. 8, the icon management apparatus 80 may include: a receiving module 81, a display module 82, and a control module 83.

The receiving module 81 is configured to receive a first input by a user; the display module 82 is configured to display a first desktop subpage and a second desktop subpage in a layered manner in response to the first input received by the receiving module 81, where the first desktop subpage is located above the second desktop subpage, and display transparency of the first desktop subpage is greater than zero; the receiving module 81 is further configured to receive a second input by the user for a first icon in the first desktop subpage; and the control module 83 is configured to move the first icon into the second desktop subpage in response to the second input received by the receiving module 81.

In a possible implementation, the control module 83 is specifically configured to: move the first icon into a first folder in the second desktop subpage; or move the first icon to a first spare position in the second desktop subpage.

In a possible implementation, the control module 83 is specifically configured to create a second folder at a position corresponding to a second icon in the second desktop subpage, where the second folder includes the first icon and the second icon.

In a possible implementation, the display module 82 is further configured to display, after the receiving module 81 receives the first input by the user, a longitudinal selection control in a first display region in response to the first input, where the longitudinal selection control is configured to switch the second desktop subpage to a third desktop subpage, and a display region of the first desktop subpage is different from the first display region.

In a possible implementation, the second input includes a first sub-input and a second sub-input, and the display module 82 is specifically configured to:
in response to the first sub-input by the user of dragging the first icon to the first display region, keep displaying the second desktop subpage, cancel the display of the first desktop subpage, and display the first icon in the first display region; and
in response to the second sub-input by the user of dragging the first icon from the first display region into the second desktop subpage, display the first icon in the second desktop subpage.

In a possible implementation, the receiving module 81 is further configured to receive a fourth input after the display module 82 displays the first desktop subpage and the second desktop subpage in a layered manner; and
the control module 83 is further configured to perform a target operation corresponding to the fourth input in response to the fourth input received by the receiving module 81, where
the target operation includes any one of the following:
   updating and displaying the second desktop subpage into a fourth desktop subpage; or
   creating a fifth desktop subpage.

In a possible implementation, the receiving module 81 is further configured to receive a fifth input by the user after the display module 82 displays the first desktop subpage and the second desktop subpage in a layered manner;
the display module 82 is further configured to display thumbnails of at least two desktop subpages in response to the fifth input received by the receiving module 81, where the thumbnails of the at least two desktop subpages include a thumbnail of the first desktop subpage and a thumbnail of the second desktop subpage;
the receiving module 81 is further configured to receive a sixth input by the user; and
the control module 83 is further configured to: in response to the sixth input received by the receiving module 81, update a display sequence of the thumbnails of the at least two desktop subpages or newly create a thumbnail corresponding to a sixth desktop subpage, where
the display sequence of the thumbnails of the at least two desktop subpages corresponds to a display sequence of the at least two desktop subpages.

In a possible implementation, the receiving module 81 is further configured to receive a seventh input by the user for the first desktop subpage before the receiving module 81 receives the second input by the user for the first icon in the first desktop subpage;
the control module 83 is further configured to: in response to the seventh input received by the receiving module 81, cause an icon in the first desktop subpage to be in a target state, where the target state indicates that the icon in the first desktop subpage is only movable into the second desktop subpage; and
the second input includes a third sub-input and a fourth sub-input, and the control module 83 is specifically configured to:
   in response to the third sub-input by the user of dragging the first icon in the first desktop subpage to a first target position in the first desktop subpage, display first prompt information; and
   in response to the fourth sub-input by the user for the first prompt information, move the first icon to a second spare position in the second desktop subpage, where
   the first prompt information is used for indicating whether to move the first icon to the second spare position in the second desktop subpage, and the second spare position is a position corresponding to the first target position.

In a possible implementation, the second input further includes a fifth sub-input and a sixth sub-input; and the control module 83 is specifically configured to:
in response to the fifth sub-input by the user of dragging the first icon in the first desktop subpage to a second target position in the first desktop subpage, enlarge and display a third icon at a third target position in the second desktop subpage, and display second prompt information; and
in response to the sixth sub-input by the user for the second prompt information, newly create a third folder at the third target position, where the third folder includes the first icon and the third icon; and
the third target position is a position corresponding to the second target position, and the second prompt information is used for indicating whether to newly create the third folder at the third target position.

In a possible implementation, the second input further includes a seventh sub-input and an eighth sub-input; and the control module 83 is specifically configured to:
in response to the seventh sub-input by the user of dragging the first icon in the first desktop subpage to a fourth target position in the first desktop subpage, enlarge and display a fourth folder at a fifth target position in the second desktop subpage, and display third prompt information; and
in response to the eighth sub-input by the user for the third prompt information, move the first icon into the fourth folder, where
the fifth target position is a position corresponding to the fourth target position, and the third prompt information is used for indicating whether to move the first icon into the fourth folder.

In the icon management apparatus provided in the embodiments of this application, when the user needs to organize an icon on a desktop of the icon management apparatus, since the user can trigger, through the first input on any desktop subpage on the desktop, the icon management apparatus to display two desktop subpages including the desktop subpage on the desktop in a layered manner, and display an upper desktop subpage with specific transparency, the user can preview icons in a lower desktop subpage to determine a position to which the icon is to be moved, and the user then may trigger, through another input, the icon management apparatus to directly move the icon in the upper desktop subpage to the lower desktop subpage. Therefore, compared with an icon moving manner of long pressing and dragging a to-be-moved icon to trigger switching between desktop subpages, the icon management method provided in the embodiments of this application can preview icons in other desktop subpages in advance, thereby simplifying an operation process of moving an icon, and reducing the difficulty in moving an icon.

The icon management apparatus in the embodiments of this application may be an electronic device, or may be a component in the electronic device, for example, an integrated circuit or a chip. The electronic device may be a terminal or another device other than the terminal. For example, the electronic device may be a mobile phone, a tablet computer, a notebook computer, a palmtop computer, an in-vehicle electronic device, a mobile Internet device (Mobile Internet Device, MID), an augmented reality (augmented reality)/virtual reality (virtual reality, VR) device, a robot, a wearable device, an ultra-mobile personal computer (ultra-mobile personal computer, UMPC), a netbook, or a personal digital assistant (personal digital assistant, PDA); or may be a server, a network attached storage (Network Attached Storage, NAS), a personal computer (personal computer, PC), a television (television, TV), a teller machine, or a self-service machine, which is not specifically limited in the embodiments of this application.

The icon management apparatus in the embodiments of this application may be an apparatus having an operating system. The operating system may be an Android (Android) operating system, or may be an ios operating system, or may be another possible operating system, which is not specifically limited in the embodiments of this application.

The icon management apparatus provided in the embodiments of this application can implement the processes implemented in the method embodiments of FIG. 1 to FIG. 7 and achieve the same technical effects. To avoid repetition, details are not described herein.

Optionally, as shown in FIG. 9, an embodiment of this application further provides an electronic device 900, including a processor 901 and a memory 902, where the memory 902 stores a program or an instruction executable on the processor 901. When the program or the instruction is executed by the processor 901, the steps of the icon management method embodiments are implemented, and the same technical effects can be achieved. To avoid repetition, details are not described herein.

It should be noted that, the electronic device in the embodiments of this application includes a mobile electronic device and a non-mobile electronic device.

FIG. 10 is a schematic structural diagram of hardware of an electronic device according to an embodiment of this application.

The electronic device 1000 includes, but is not limited to, components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

A person skilled in the art may understand that the electronic device 1000 may further include a power supply (such as a battery) for supplying power to the components. The power supply may be logically connected to the processor 1010 through a power management system, thereby implementing functions such as charging, discharging, and power consumption management through the power management system. The structure of the electronic device shown in FIG. 10 constitutes no limitation on the electronic device, and the electronic device may include more or fewer components than those shown in the figure, or some components may be combined, or a different component deployment may be used. Details are not described herein.

The user input unit 1007 is configured to receive a first input by a user; the display unit 1006 is configured to display a first desktop subpage and a second desktop subpage in a layered manner in response to the first input received by the user input unit 1007, where the first desktop subpage is located above the second desktop subpage, and display transparency of the first desktop subpage is greater than zero; the user input unit 1007 is further configured to receive a second input by the user for a first icon in the first desktop subpage; and the processor 1010 is configured to move the first icon into the second desktop subpage in response to the second input received by the user input unit 1007.

Optionally, the processor 1010 is specifically configured to: move the first icon into a first folder in the second desktop subpage; or move the first icon to a first spare position in the second desktop subpage.

Optionally, the processor 1010 is specifically configured to create a second folder at a position corresponding to a second icon in the second desktop subpage, where the second folder includes the first icon and the second icon.

Optionally, the display unit 1006 is further configured to display, after the user input unit 1007 receives the first input by the user, a longitudinal selection control in a first display region in response to the first input, where the longitudinal selection control is configured to switch the second desktop subpage to a third desktop subpage, and a display region of the first desktop subpage is different from the first display region.

Optionally, the second input includes a first sub-input and a second sub-input, and the display unit 1006 is specifically configured to:
in response to the first sub-input by the user of dragging the first icon to the first display region, keep displaying the second desktop subpage, cancel the display of the first desktop subpage, and display the first icon in the first display region; and
in response to the second sub-input by the user of dragging the first icon from the first display region into the second desktop subpage, display the first icon in the second desktop subpage.

Optionally, the user input unit 1007 is further configured to receive a fourth input after the display unit 1006 displays the first desktop subpage and the second desktop subpage in a layered manner; and
the processor 1010 is further configured to perform a target operation corresponding to the fourth input in response to the fourth input received by the user input unit 1007, where
the target operation includes any one of the following:
   updating and displaying the second desktop subpage into a fourth desktop subpage; or
   creating a fifth desktop subpage.

Optionally, the user input unit 1007 is further configured to receive a fifth input by the user after the display unit 1006 displays the first desktop subpage and the second desktop subpage in a layered manner;
the display unit 1006 is further configured to display thumbnails of at least two desktop subpages in response to the fifth input received by the user input unit 1007, where the thumbnails of the at least two desktop subpages include a thumbnail of the first desktop subpage and a thumbnail of the second desktop subpage;
the user input unit 1007 is further configured to receive a sixth input by the user; and the processor 1010 is further configured to: in response to the sixth input received by the user input unit 1007, update a display sequence of the thumbnails of the at least two desktop subpages or newly create a thumbnail corresponding to a sixth desktop subpage, where the display sequence of the thumbnails of the at least two desktop subpages corresponds to a display sequence of the at least two desktop subpages.

Optionally, the user input unit 1007 is further configured to receive a seventh input by the user for the first desktop subpage before receiving the second input by the user for the first icon in the first desktop subpage;
the processor 1010 is further configured to: in response to the seventh input received by the user input unit 1007, cause an icon in the first desktop subpage to be in a target state, where the target state indicates that the icon in the first desktop subpage is only movable into the second desktop subpage;
the second input includes a third sub-input and a fourth sub-input, and the display unit 1006 is specifically configured to: in response to the third sub-input by the user of dragging the first icon in the first desktop subpage to a first target position in the first desktop subpage, display first prompt information; and
the processor 1010 is configured to: in response to the fourth sub-input by the user for the first prompt information, move the first icon to a second spare position in the second desktop subpage, where
the first prompt information is used for indicating whether to move the first icon to the second spare position in the second desktop subpage, and the second spare position is a position corresponding to the first target position.

Optionally, the second input further includes a fifth sub-input and a sixth sub-input; the display unit 1006 is specifically configured to: in response to the fifth sub-input by the user of dragging the first icon in the first desktop subpage to a second target position in the first desktop subpage, enlarge and display a third icon at a third target position in the second desktop subpage, and display second prompt information; and
the processor 1010 is configured to: in response to the sixth sub-input by the user for the second prompt information, newly create a third folder at the third target position, where the third folder includes the first icon and the third icon; and
the third target position is a position corresponding to the second target position, and the second prompt information is used for indicating whether to newly create the third folder at the third target position.

Optionally, the second input further includes a seventh sub-input and an eighth sub-input; the display unit 1006 is specifically configured to: in response to the seventh sub-input by the user of dragging the first icon in the first desktop subpage to a fourth target position in the first desktop subpage, enlarge and display a fourth folder at a fifth target position in the second desktop subpage, and display third prompt information; and
the processor 1010 is configured to: in response to the eighth sub-input by the user for the third prompt information, move the first icon into the fourth folder, where
the fifth target position is a position corresponding to the fourth target position, and the third prompt information is used for indicating whether to move the first icon into the fourth folder.

In the electronic device provided in the embodiments of this application, when the user needs to organize an icon on a desktop of an electronic device, since the user can trigger, through the first input on any desktop subpage on the desktop, the electronic device to display two desktop subpages including the desktop subpage on the desktop in a layered manner, and display an upper desktop subpage with specific transparency, the user can preview icons in a lower desktop subpage to determine a position to which the icon is to be moved, and the user then may trigger, through another input, the electronic device to directly move the icon in the upper desktop subpage to the lower desktop subpage. Therefore, compared with an icon moving manner of long pressing and dragging a to-be-moved icon to trigger switching between desktop subpages, the icon management method provided in the embodiments of this application can preview icons in other desktop subpages in advance, thereby simplifying an operation process of moving an icon, and reducing the difficulty in moving an icon.

It should be understood that, in the embodiments of this application, the input unit 1004 may include a graphics processing unit (Graphics Processing Unit, GPU) 10041 and a microphone 10042. The graphics processing unit 10041 performs processing on image data of a static picture or a video that is obtained by an image acquisition device (for example, a camera) in a video acquisition mode or an image acquisition mode. The display unit 1006 may include a display panel 10061. The display panel 10061 may be configured in a form of a liquid crystal display, an organic light-emitting diode, or the like. The user input unit 1007 includes at least one of a touch panel 10071 and another input device 10072. The touch panel 10071 is also referred to as a touch screen. The touch panel 10071 may include two parts: a touch detection apparatus and a touch controller. The another input device 10072 may include, but not limited to, a physical keyboard, a functional key (such as a volume control key or a switch key), a track ball, a mouse, and a joystick, which is not described herein in detail.

The memory 1009 may be configured to store a software program and various data. The memory 1009 may mainly include a first storage region storing the program or an instruction and a second storage region storing the data. The first storage region may store an operating system, an application program or an instruction required by at least one function (for example, a sound playback function and an image display function), and the like. In addition, the memory 1009 may include a volatile memory or a non-volatile memory, or the memory 1009 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 1009 in the embodiments of this application includes, but is not limited to, these memories and any other memory of a suitable type.

The processor 1010 may include one or more processing units. Optionally, the processor 1010 integrates an application processor and a modem processor, where the application processor mainly processes operations involving an operating system, a user interface, an application program, and the like, and the modem processor mainly processes a wireless communication signal, for example, a baseband processor. It may be understood that the foregoing modem processor may not be integrated into the processor 1010.

An embodiment of this application further provides a readable storage medium, having a program or an instruction stored therein, where when the program or the instruction is executed by a processor, the processes of the icon management method embodiments are implemented, and the same technical effects can be achieved. To avoid repetition, details are not described herein.

The processor is the processor in the electronic device described in the foregoing embodiments. The readable storage medium includes a computer-readable storage medium, for example, a computer read-only memory ROM, a random access memory RAM, a magnetic disk, an optical disc, or the like.

An embodiment of this application further provides a chip. The chip includes a processor and a communication interface, the communication interface is coupled to the processor, and the processor is configured to execute a program or an instruction, to implement the processes of the icon management method embodiments, and the same technical effects can be achieved. To avoid repetition, details are not described herein.

It should be understood that, the chip provided in the embodiments of this application may also be referred to as a system-level chip, a system chip, a chip system, a system on chip, or the like.

An embodiment of this application provides a computer program product, the program product being stored in a storage medium, where when the program product is executed by at least one processor, the processes of the icon management method embodiments are implemented, and the same technical effects can be achieved. To avoid repetition, details are not described herein.

It should be noted that, the term "include", "comprise", or any other variant thereof in this specification is intended to cover non-exclusive inclusion, so that a process, a method, an object, or an apparatus that includes a series of elements not only includes the elements, but also includes other elements that are not expressly listed, or may further include elements that are inherent to the process, the method, the object, or the apparatus. Without more limitations, an element defined by a sentence "including one......" does not exclude existence of other same elements in the process, the method, the object, or the apparatus that includes the element. In addition, it should be noted that a scope of the method and the apparatus in the implementations of this application is not limited to performing functions according to a sequence that is shown or discussed, but may further include performing functions in a substantially simultaneous manner or in a reversed sequence according to the functions involved. For example, the described method may be performed in a different order than a described order, and various steps may be added, omitted, or combined. In addition, features described with reference to some examples may be combined in other examples.

Through the description of the foregoing implementations, a person skilled in the art may clearly understand that the methods according to the foregoing embodiments may be implemented by software and a necessary general hardware platform, and certainly, may alternatively be implemented by hardware, but in many cases, the former manner is a better implementation. Based on such an understanding, the technical solutions of this application essentially or the part contributing to the related art may be implemented in a form of a computer software product. The computer software product is stored in a storage medium (such as a ROM/RAM, a magnetic disk, or an optical disc) and includes several instructions for instructing a terminal (which may be a mobile phone, a computer, a server, a network device, or the like) to perform the methods described in the embodiments of this application.

The embodiments of this application are described above with reference to the accompanying drawings. However, this application is not limited to the specific implementations described above, and the specific implementations described above are only exemplary and not limitative. A person of ordinary skill in the art may make various variations under the teaching of this application without departing from the spirit of this application and the protection scope of the claims, and such variations shall all fall within the protection scope of this application.

## Claims

1. An icon management method, the method comprising:
receiving a first input by a user;
displaying a first desktop subpage and a second desktop subpage in a layered manner in response to the first input, wherein the first desktop subpage is located above the second desktop subpage, and display transparency of the first desktop subpage is greater than zero;
receiving a second input by the user for a first icon in the first desktop subpage; and
moving the first icon into the second desktop subpage in response to the second input.

2. The method according to claim 1, wherein the moving the first icon into the second desktop subpage comprises:
moving the first icon into a first folder in the second desktop subpage; or moving the first icon to a first spare position in the second desktop subpage.

3. The method according to claim 1, wherein the moving the first icon into the second desktop subpage comprises:
creating a second folder at a position corresponding to a second icon in the second desktop subpage, wherein the second folder comprises the first icon and the second icon.

4. The method according to claim 1, wherein after the receiving a first input by a user, the method further comprises:
displaying a longitudinal selection control in a first display region in response to the first input, wherein the longitudinal selection control is configured to switch the second desktop subpage to a third desktop subpage, and a display region of the first desktop subpage is different from the first display region.

5. The method according to claim 4, wherein the second input comprises a first sub-input and a second sub-input, and the moving the first icon into the second desktop subpage in response to the second input comprises:
in response to the first sub-input by the user of dragging the first icon to the first display region, keeping displaying the second desktop subpage, canceling the display of the first desktop subpage, and displaying the first icon in the first display region; and
in response to the second sub-input by the user of dragging the first icon from the first display region into the second desktop subpage, displaying the first icon in the second desktop subpage.

6. The method according to claim 1, wherein after the displaying a first desktop subpage and a second desktop subpage in a layered manner, the method further comprises:
receiving a fourth input by a user; and
performing a target operation corresponding to the fourth input in response to the fourth input, wherein
the target operation comprises any one of the following:
updating and displaying the second desktop subpage into a fourth desktop subpage; or
creating a fifth desktop subpage.

7. The method according to claim 1, wherein after the displaying a first desktop subpage and a second desktop subpage in a layered manner, the method further comprises:
receiving a fifth input by a user;
displaying thumbnails of at least two desktop subpages in response to the fifth input, wherein the thumbnails of the at least two desktop subpages comprise a thumbnail of the first desktop subpage and a thumbnail of the second desktop subpage;
receiving a sixth input by a user; and
in response to the sixth input, updating a display sequence of the thumbnails of the at least two desktop subpages or newly creating a thumbnail corresponding to a sixth desktop subpage, wherein
the display sequence of the thumbnails of the at least two desktop subpages corresponds to a display sequence of the at least two desktop subpages.

8. The method according to claim 1, wherein before the receiving a second input by the user for a first icon in the first desktop subpage, the method further comprises:
receiving a seventh input by the user for the first desktop subpage; and
in response to the seventh input, causing an icon in the first desktop subpage to be in a target state, wherein the target state indicates that the icon in the first desktop subpage is only movable into the second desktop subpage; and
the second input comprises a third sub-input and a fourth sub-input, and the moving the first icon into the second desktop subpage in response to the second input comprises:
in response to the third sub-input by the user of dragging the first icon in the first desktop subpage to a first target position in the first desktop subpage, displaying first prompt information, wherein the first prompt information is used for indicating whether to move the first icon to a second spare position in the second desktop subpage, and the second spare position is a position corresponding to the first target position; and
in response to the fourth sub-input by the user for the first prompt information, moving the first icon to the second spare position in the second desktop subpage.

9. The method according to claim 8, wherein the second input comprises a fifth sub-input and a sixth sub-input; and
the moving the first icon into the second desktop subpage in response to the second input further comprises:
in response to the fifth sub-input by the user of dragging the first icon in the first desktop subpage to a second target position in the first desktop subpage, enlarging and displaying a third icon at a third target position in the second desktop subpage, and displaying second prompt information, wherein the third target position is a position corresponding to the second target position, and the second prompt information is used for indicating whether to newly create a third folder at the third target position; and
in response to the sixth sub-input by the user on the second prompt information, newly creating the third folder at the third target position, wherein the third folder comprises the first icon and the third icon.

10. The method according to claim 8, wherein the second input further comprises a seventh sub-input and an eighth sub-input; and
the moving the first icon into the second desktop subpage in response to the second input further comprises:
in response to the seventh sub-input by the user of dragging the first icon in the first desktop subpage to a fourth target position in the first desktop subpage, enlarging and displaying a fourth folder at a fifth target position in the second desktop subpage, and displaying third prompt information, wherein the fifth target position is a position corresponding to the fourth target position, and the third prompt information is used for indicating whether to move the first icon into the fourth folder; and
in response to the eighth sub-input by the user on the third prompt information, moving the first icon into the fourth folder.

11. An icon management apparatus, the apparatus comprising: a receiving module, a display module, and a control module, wherein
the receiving module is configured to receive a first input by a user;
the display module is configured to display a first desktop subpage and a second desktop subpage in a layered manner in response to the first input received by the receiving module, wherein the first desktop subpage is located above the second desktop subpage, and display transparency of the first desktop subpage is greater than zero;
the receiving module is further configured to receive a second input by the user for a first icon in the first desktop subpage; and
the control module is configured to move the first icon into the second desktop subpage in response to the second input received by the receiving module.

12. The apparatus according to claim 11, wherein
the control module is specifically configured to: move the first icon into a first folder in the second desktop subpage; or move the first icon to a first spare position in the second desktop subpage.

13. The apparatus according to claim 11, wherein
the control module is specifically configured to create a second folder at a position corresponding to a second icon in the second desktop subpage, wherein the second folder comprises the first icon and the second icon.

14. The apparatus according to claim 11, wherein
the display module is further configured to display, after the receiving module receives the first input by the user, a longitudinal selection control in a first display region in response to the first input, wherein the longitudinal selection control is configured to switch the second desktop subpage to a third desktop subpage, and a display region of the first desktop subpage is different from the first display region.

15. The apparatus according to claim 14, wherein the second input comprises a first sub-input and a second sub-input, and the display module is specifically configured to:
in response to the first sub-input by the user of dragging the first icon to the first display region, keep displaying the second desktop subpage, cancel the display of the first desktop subpage, and display the first icon in the first display region; and
in response to the second sub-input by the user of dragging the first icon from the first display region into the second desktop subpage, display the first icon in the second desktop subpage.

16. The apparatus according to claim 11, wherein
the receiving module is further configured to receive a fourth input by a user after the display module displays the first desktop subpage and the second desktop subpage in a layered manner; and
the control module is further configured to perform a target operation corresponding to the fourth input in response to the fourth input received by the receiving module, wherein
the target operation comprises any one of the following:
updating and displaying the second desktop subpage into a fourth desktop subpage; or
creating a fifth desktop subpage.

17. The apparatus according to claim 11, wherein
the receiving module is further configured to receive a fifth input by a user after the display module displays the first desktop subpage and the second desktop subpage in a layered manner;
the display module is further configured to display thumbnails of at least two desktop subpages in response to the fifth input received by the receiving module, wherein the thumbnails of the at least two desktop subpages comprise a thumbnail of the first desktop subpage and a thumbnail of the second desktop subpage;
the receiving module is further configured to receive a sixth input by a user; and
the control module is further configured to: in response to the sixth input received by the receiving module, update a display sequence of the thumbnails of the at least two desktop subpages or newly create a thumbnail corresponding to a sixth desktop subpage, wherein
the display sequence of the thumbnails of the at least two desktop subpages corresponds to a display sequence of the at least two desktop subpages.

18. The apparatus according to claim 11, wherein
the receiving module is further configured to receive a seventh input by the user for the first desktop subpage before the receiving module receives the second input by the user on the first icon in the first desktop subpage;
the control module is further configured to: in response to the seventh input received by the receiving module, cause an icon in the first desktop subpage to be in a target state, wherein the target state indicates that the icon in the first desktop subpage is only movable into the second desktop subpage; and
the second input comprises a third sub-input and a fourth sub-input, and the control module is specifically configured to:
in response to the third sub-input by the user of dragging the first icon in the first desktop subpage to a first target position in the first desktop subpage, display first prompt information; and
in response to the fourth sub-input by the user for the first prompt information, move the first icon to a second spare position in the second desktop subpage, wherein
the first prompt information is used for indicating whether to move the first icon to the second spare position in the second desktop subpage, and the second spare position is a position corresponding to the first target position.

19. The apparatus according to claim 18, wherein the second input further comprises a fifth sub-input and a sixth sub-input; and
the control module is specifically configured to:
in response to the fifth sub-input by the user of dragging the first icon in the first desktop subpage to a second target position in the first desktop subpage, enlarge and display a third icon at a third target position in the second desktop subpage, and display second prompt information; and
in response to the sixth sub-input by the user on the second prompt information, newly create a third folder at the third target position, wherein the third folder comprises the first icon and the third icon; and
the third target position is a position corresponding to the second target position, and the second prompt information is used for indicating whether to newly create the third folder at the third target position.

20. The apparatus according to claim 18, wherein the second input further comprises a seventh sub-input and an eighth sub-input; and
the control module is specifically configured to:
in response to the seventh sub-input by the user of dragging the first icon in the first desktop subpage to a fourth target position in the first desktop subpage, enlarge and display a fourth folder at a fifth target position in the second desktop subpage, and display third prompt information, wherein the fifth target position is a position corresponding to the fourth target position, and the third prompt information is used for indicating whether to move the first icon into the fourth folder; and
in response to the eighth sub-input by the user on the third prompt information, move the first icon into the fourth folder, wherein
the fifth target position is a position corresponding to the fourth target position, and the third prompt information is used for indicating whether to move the first icon into the fourth folder.

21. An electronic device, comprising a processor and a memory, wherein the memory stores a program or an instruction executable on the processor, and when the program or the instruction is executed by the processor, the steps of the method according to any one of claims 1 to 10 are implemented.
